(19) Europäisches Patentamt
European Patent Office
Office européen des brevets

(11) **EP 2 673 859 B1**

(12) **FASCICULE DE BREVET EUROPEEN**

(45) Date de publication et mention
de la délivrance du brevet:
**18.03.2015 Bulletin 2015/12**

(21) Numéro de dépôt: **12703320.7**

(22) Date de dépôt: **10.02.2012**

(51) Int Cl.:
***H02H 9/02*** *(2006.01)*     ***H02J 7/00*** *(2006.01)*
***H02H 7/18*** *(2006.01)*

(86) Numéro de dépôt international:
**PCT/EP2012/052365**

(87) Numéro de publication internationale:
**WO 2012/107586 (16.08.2012 Gazette 2012/33)**

(54) **INSTALLATION COMPRENANT DEUX BATTERIES RACCORDÉES EN PARALLÈLE**

EINRICHTUNG MIT ZWEI PARALLEL GESCHALTETEN BATTERIEN

ARRANGEMENT WITH TWO PARALLEL CONNECTED BATTERIES

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **10.02.2011 FR 1151068**

(43) Date de publication de la demande:
**18.12.2013 Bulletin 2013/51**

(73) Titulaire: **COMMISSARIAT A L'ENERGIE
ATOMIQUE ET AUX
ENERGIES ALTERNATIVES
75015 Paris (FR)**

(72) Inventeurs:
• **ZARA, Henri**
  **73370 Le Bourget du Lac (FR)**
• **HUGUENIN, Bruno**
  **F-26400 Cobonne (FR)**

(74) Mandataire: **Novaimo
Bâtiment Europa 2
310 avenue Marie Curie
Archamps Technopole
74166 Saint Julien en Genevois Cedex (FR)**

(56) Documents cités:
**EP-A2- 1 892 812     WO-A1-95/33295
WO-A2-2010/120832     DE-A1-102008 060 936
US-A1- 2008 012 529     US-A1- 2009 256 526
US-A1- 2009 278 497**

EP 2 673 859 B1

**Description**

La présente invention concerne le domaine technique des dispositifs de protection des sources de tension contre les surintensités des courants. L'invention porte sur une installation comprenant deux batteries raccordées en parallèle. L'invention porte aussi sur un procédé de fonctionnement d'une telle installation.

Les applications utilisant un stockage électrique dans des batteries se multiplient avec les dispositifs les utilisant, comme les appareils nomades et les véhicules à traction électrique. Certaines applications nécessitent une modularité dans la capacité de stockage, avec l'ajout de nouveaux éléments de batteries pour augmenter la capacité de stockage en fonction de l'utilisation, fluctuant au long de la vie du produit. La mise en parallèle directe de nouveaux éléments sur la batterie d'origine est un moyen simple d'augmenter la capacité de stockage. Les batteries rajoutées *a posteriori* doivent être compatible avec la batterie d'origine en particulier :

- Leurs tensions nominales doivent être identiques ;
- Leurs technologies doivent être identiques ;

Néanmoins, la batterie ajoutée peut présenter des différences au niveau de :

- Son état de charge SOC ;
- Son état de santé SOH.

Dans ces conditions, une mise en parallèle sans précaution peut engendrer de forts courants avec des conséquences allant de la détérioration prématurée des batteries à l'accident (feu, risques pour la sécurité des personnes...)

Au niveau de la mise en parallèle de batteries, les préconisations usuelles indiquent qu'il faut s'assurer au préalable que les batteries ont des tensions proches. Un fusible de protection est classiquement utilisé pour interrompre un courant anormalement élevé mais il ne répond pas à la problématique puisqu'il est irréversible.

On connaît aussi un composant de type fusible réarmable ou réversible appelé « polyswitch » et qui a un comportement variant avec sa température. Le passage du courant engendre un échauffement du composant qui, à partir d'un certain seuil, devient très résistif. Il limite ainsi le courant à un niveau acceptable. A la suppression du défaut, il retrouve ses propriétés initiales. Ce type de composant répond bien à la problématique d'un point de vue fonctionnel mais il présente deux inconvénients :

- sa résistance de repos (hors défaut) est non négligeable, ce qui pénalise les performances de la batterie. Selon les technologies, la résistance du composant peut être 20 fois supérieure à la résistance interne de la batterie.
- son temps de réponse est variable de plusieurs dizaines de millisecondes à plusieurs secondes selon la nature du défaut et les conditions environnantes (température ambiante, montage du composant...), ce qui est préjudiciable à la protection des batteries car il autorise un pic de courant initial.

On connaît du document EP 684 677 un dispositif de protection à interrupteur commandé permettant de protéger un dispositif électrique contre des surintensités de courant. Un tel dispositif de protection ne convient pas à l'application mentionnée précédemment, car il interdirait tout courant électrique entre les deux bornes des batteries à connecter lorsque leur différence de potentiel est trop élevée.

On connaît aussi du document US 2005/285 572 un dispositif de protection d'une batterie contre les surintensités de courant. Ce dispositif de protection comprend une résistance de détection placée en permanence en série avec la batterie. Ceci est, comme expliqué précédemment, très fortement nuisible aux performances de la batterie.

On connait du document WO 2010120832 une installation comprenant deux batteries mises en parallèle à l'aide d'un dispositif de protection d'une source de tension comprenant un transistor ainsi qu'un moyen de commande du transistor permettant de limiter le courant et commandé pendant une durée prédéterminée.

Le but de l'invention est de fournir une installation permettant de remédier aux problèmes évoqués précédemment et améliorant les installations connues de l'art antérieur. En particulier, l'invention propose une installation de protection simple, consommant très peu d'énergie, présentant une très faible résistance électrique et permettant d'éviter des pics de courant tout en protégeant efficacement des sources de tension contre les surintensités. Cette invention s'applique à toute source de tension comme notamment les batteries, les alimentations en tension, les convertisseurs continu-continu.

Dans ce but, l'installation comprend deux batteries raccordées en parallèle à l'aide d'un premier dispositif de protection d'une source de tension, comprenant :

- un premier ensemble parallèle comprenant un interrupteur commandé et un élément résistif,
- une bobine montée en série avec ledit premier ensemble entre les deux batteries,

EP 2 673 859 B1

- un moyen de commande de l'interrupteur dudit premier ensemble commandé en fonction de la différence de tension entre les deux batteries de sorte que l'interrupteur commandé est fermé lorsque la différence de tension devient inférieure à un premier seuil et de sorte que l'interrupteur commandé est ouvert lorsque la différence de tension devient supérieure à un deuxième seuil.

Le moyen de commande de l'interrupteur commandé peut utiliser une information de tension aux bornes de la bobine pour commander l'état de l'interrupteur commandé.

Le moyen de commande de l'interrupteur commandé peut utiliser une information de tension aux bornes de l'élément résistif pour commander l'état de l'interrupteur commandé.

Le moyen de commande de l'interrupteur commandé peut utiliser une information de tension aux bornes du premier ensemble comprenant la bobine et l'élément résistif pour commander l'état de l'interrupteur commandé.

L'interrupteur commandé peut être un transistor de puissance, en particulier un transistor MOS à effet de champ.

Le moyen de commande peut comprendre un transistor de pilotage du transistor de puissance.

Le moyen de commande peut comprendre un comparateur de tension.

Un ensemble série en opposition de deux diodes Zener peut être disposé en parallèle de la bobine.

L'installation peut comprendre un deuxième dispositif de protection, l'interrupteur commandé de chacun des premier et deuxième dispositifs étant un transistor de puissance, en particulier un transistor MOS à effet de champ, les premier et deuxième dispositifs étant disposés en série et les transistors de puissance des premier et deuxième dispositifs de protection étant connectés l'un à l'autre symétriquement.

Le deuxième dispositif peut comprendre un deuxième ensemble parallèle comprenant un deuxième interrupteur commandé et un deuxième élément résistif.

Le moyen de commande des premier et deuxième interrupteurs commandés peut utiliser une information de tension aux bornes d'un ensemble constitué par la bobine et/ou les premier et/ou deuxième éléments résistifs.

Selon l'invention, un procédé de fonctionnement d'une installation définie précédemment comprend l'utilisation d'une information de tension aux bornes de la bobine pour commander l'état de l'interrupteur commandé.

On peut commander la fermeture de l'interrupteur commandé lorsque la valeur absolue de la tension entre les deux batteries, notamment la valeur absolue de la tension aux bornes d'un ensemble comprenant la bobine et l'élément résistif, devient inférieure à un premier seuil.

On peut commander l'ouverture de l'interrupteur commandé lorsque la valeur absolue de la tension entre les deux batteries, notamment la valeur absolue de la tension aux bornes d'un ensemble comprenant la bobine et l'élément résistif, devient supérieure à un deuxième seuil.

Les dessins annexés représentent, à titre d'exemples, différents modes de réalisation d'un dispositif de protection selon l'invention.

La figure 1 est un schéma de principe du fonctionnement d'un dispositif de protection selon l'invention.

La figure 2 est un schéma électrique d'un premier mode de réalisation d'un dispositif de protection selon l'invention.

La figure 3 est un schéma électrique détaillé du premier mode de réalisation d'un dispositif de protection selon l'invention.

La figure 4 est un schéma électrique détaillé d'un deuxième mode de réalisation d'un dispositif de protection selon l'invention.

La figure 5 est un schéma électrique illustrant le problème technique.

La figure 6 est un exemple d'évolution du courant traversant une batterie suite à une connexion en parallèle à une autre batterie selon le schéma de la figure 5.

La figure 7 est un schéma électrique illustrant un aspect de la solution apporté par le dispositif de protection selon l'invention.

La figure 8 est un exemple d'évolution du courant traversant une batterie suite à une connexion en parallèle à une autre batterie du fait de l'aspect de la solution apportée par le dispositif de protection selon la figure 7.

La figure 9 est un graphique représentant des évolutions du courant traversant une batterie et du temps que celui-ci met à s'établir en fonction de la valeur d'inductance de la bobine.

La figure 10 est un graphique permettant de comparer les évolutions du courant traversant une batterie suite à une connexion en parallèle à une autre batterie, selon qu'une bobine d'inductance est ou non disposée entre les batteries.

La figure 11 est un graphique similaire à celui de la figure précédente pour un circuit présentant une bobine d'inductance beaucoup plus faible, l'échelle de temps étant également différente.

La figure 12 est un schéma logique de fonctionnement de la commande d'un dispositif de protection selon un mode de réalisation de l'invention.

La figure 13 est un diagramme temporel d'évolution de deux signaux : une tension d'entrée du circuit de commande de la figure 12 et le signal de commande correspondant.

La figure 14 est un diagramme temporel d'évolution de trois signaux : la différence de potentiel électrique entre deux bornes de batterie destinées à être connectées, le signal de commande de l'interrupteur commandé et le courant parcourant les batteries.

La figure 15 est un diagramme temporel d'évolution de trois signaux : la différence de potentiel électrique entre deux bornes de batterie destinées à être connectées, le signal de commande de l'interrupteur commandé et le courant parcourant les batteries.

La figure 16 est un diagramme temporel d'évolution de trois signaux : la différence de potentiel électrique entre deux bornes de batterie destinées à être connectées, la tension électrique aux bornes de la bobine d'inductance et la tension électrique aux bornes de l'élément résistif de limitation du courant.

La figure 17 est un diagramme temporel d'évolution de trois signaux : la différence de potentiel électrique entre deux bornes de batterie destinées à être connectées, le signal de commande de l'interrupteur commandé et le courant parcourant les batteries.

La figure 18 est un diagramme montrant les évolutions du rendement d'un dispositif de batterie comprenant un dispositif de protection selon l'invention en fonction des différences de tension existant entre ce dispositif de batterie et un autre dispositif de batteries, les deux dispositifs de batterie devant être connectés en parallèle.

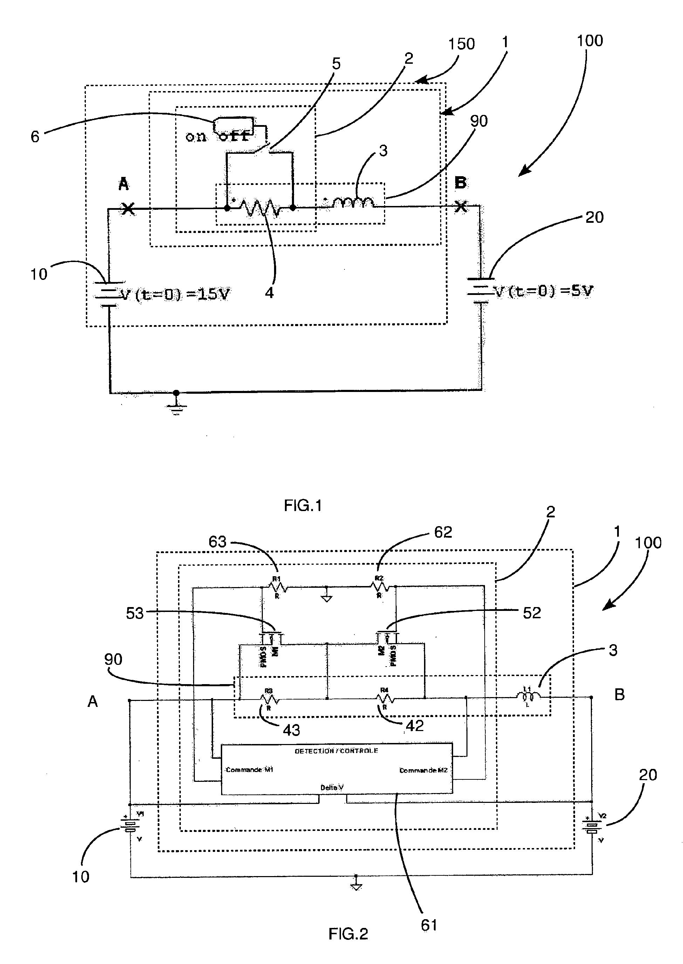

Le principe d'un dispositif de protection 1 selon l'invention est représenté à la figure 1. Il permet la connexion en parallèle de deux batteries 10 et 20 tout en assurant qu'au cours de cette connexion, l'intensité du courant électrique traversant les batteries ne sera pas trop élevée au cas où les tensions des batteries ne seraient pas égales.

De préférence, le dispositif de protection 1 selon l'invention est associé à une batterie 10, c'est-à-dire qu'un dispositif de batterie 150 selon l'invention comprend une batterie 10 et un dispositif de protection selon l'invention.

Le dispositif de protection permet de protéger la batterie contre les variations rapides et de grande amplitude du courant (courant d'appel), c'est-à-dire contre les surintensités de courant. Ce dispositif de protection est alimenté par la batterie à laquelle il est associé et présente une consommation très faible (de préférence une consommation inférieure à l'autodécharge de la batterie à laquelle il est associé). Par ailleurs, le dispositif de protection présente une résistance série très faible (de préférence, une résistance série inférieure à la résistance interne de la batterie à laquelle il est associé). Les performances intrinsèques de la batterie à laquelle il est associé ne sont ainsi pas altérées par le circuit.

Le dispositif de protection comprend :

- un circuit 2 incluant :

    - un ensemble parallèle comprenant un interrupteur commandé 5 et un élément résistif 4, l'ensemble étant destiné à être monté en série avec la batterie,
    - un moyen 6 de commande de l'interrupteur commandé, et

- une bobine 3 montée en série avec l'ensemble et destinée à être montée en série avec la batterie.

Le dispositif de protection est destiné à être monté en série avec la batterie à laquelle il est associé.

Sur le schéma de la figure 1, on a connecté en parallèle une deuxième batterie 20 à la batterie 10.

Le dispositif de protection apporte une protection des batteries 10 et 20 contre les variations rapides du courant et limite l'amplitude de ce courant. Pour ce faire, la bobine 3 est placée en série avec la batterie 10 ou 20 et assure deux fonctions:

1. elle ralentit les variations rapides de courant et permet ainsi au dispositif de protection d'entrer en fonction avant qu'un courant trop élevé ne soit atteint.

2. elle permet la détection des variations rapides du courant, la différence de potentiel V apparaissant à ses bornes étant proportionnelle à la variation du courant V=Lxdi/dt avec L l'inductance de la bobine). Le dispositif de protection est placé entre la borne A de la première batterie 10 et la borne B de la deuxième batterie 20, les bornes A et B devant être raccordées.

Une variation rapide du courant peut avoir lieu dans deux situations typiques

- court-circuit,
- connexion de deux batteries de tensions différentes.

Ainsi, une installation 100 comprend deux batteries raccordées en parallèle à l'aide d'un dispositif de protection 1.

Facultativement, un deuxième circuit 2 peut être disposé entre les deux autres bornes des batteries destinées à être connectées.

Un premier mode de réalisation d'un dispositif 1 de protection est décrit ci-après en référence à la figure 2, le dispositif de protection étant disposé entre deux batteries 10, 20.

Ce premier mode de réalisation de dispositif de protection comprend une bobine 3 destinée à être montée en série avec la batterie et un circuit 2 incluant :

- un ensemble parallèle comprenant deux interrupteurs commandés 52 et 53 en série, connectés de façon symétrique pour obtenir une protection bidirectionnelle et chacun disposé en parallèle d'un élément résistif 42 et 43, comme une résistance, l'ensemble étant destiné à être monté en série avec la batterie et la bobine 3,
- un moyen 6 de commande des interrupteurs commandés,

le circuit et la bobine étant montés en série.

De préférence, les interrupteurs commandés sont des transistors MOS à effet de champ reliés par leurs drains. Les grilles de ces interrupteurs sont connectées à la masse au travers de résistances 62 et 63. Par ailleurs, un circuit de pilotage 61 compris dans le moyen de commande 6 commande les états des transistors, notamment en fonction de la différence de potentiel électrique existant entre les deux bornes A et B destinées à être raccordées. Ainsi, des liaisons raccordent ce circuit de pilotage à ces bornes.

Le moyen de commande comprend le circuit de pilotage et les résistances 62 et 63.

En l'absence de défaut, c'est-à-dire en l'absence de différence de potentiel trop important entre les bornes A et B des batteries à raccorder, les deux transistors sont polarisés dans l'état conducteur. Ils présentent une résistance Rdson très faible et court-circuitent les résistances 42 et 43. La protection en amplitude contre les courants d'intensité élevée est réalisée par l'insertion d'une des résistances 42, 43 sur le passage du courant en sortie de batterie. Le circuit de pilotage 61 mesure la différence de potentiel deltaV entre les bornes A et B des deux batteries et commande le blocage d'un transistor :

- le transistor 53 si V1>V2, et
- le transistor 52 si V1<V2.

La résistance 43 est alors insérée dans le circuit entre les bornes A et B des batteries dans le premier cas et la résistance 42 est alors insérée dans le circuit entre les bornes A et B des batteries dans le deuxième cas. Les résistances 42 et 43 sont dimensionnées pour limiter le courant circulant entre les deux batteries. Ce faisant, elles maintiennent la différence de potentiel DeltaV au delà de l'action de la bobine et jusqu'à ce que les tensions des deux batteries soient équilibrées. Le circuit de pilotage maintient alors la commande des transistors jusqu'à cet instant. Le seuil d'équilibrage peut être paramétré. Ensuite, la commande des transistors est relâchée et le circuit revient dans sa position initiale, les deux transistors étant conducteurs et les résistances 42 et 43 étant court-circuitées.

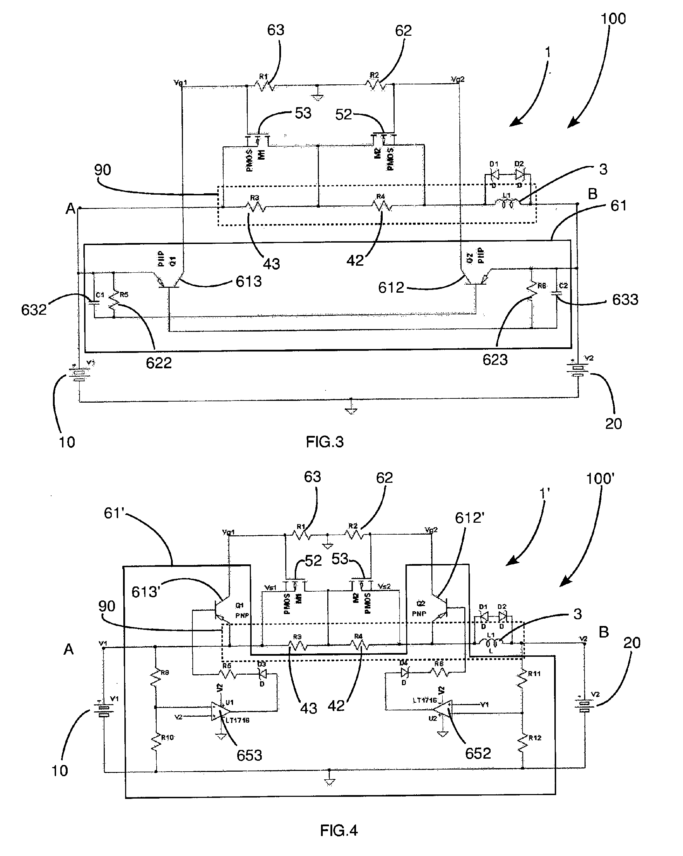

Un mode de réalisation du circuit de pilotage 61 est décrit ci-après en référence à la figure 3. Le circuit comprend principalement deux transistors bipolaires 612 et 613 : un premier transistor 612 dont la base est reliée à la borne A à connecter de la première batterie 10 au travers d'un montage parallèle d'une résistance 622 et d'un condensateur 632, l'émetteur est relié à une borne B à connecter de la deuxième batterie et le collecteur est relié à la masse au travers de la résistance 62, et un deuxième transistor 613 dont la base est reliée à la borne B à connecter de la deuxième batterie 20 au travers d'un montage parallèle d'une résistance 623 et d'un condensateur 633, l'émetteur est relié à la borne A à connecter de la première batterie et le collecteur est relié à la masse au travers de la résistance 63.

Des diodes Zener D1 et D2 peuvent être montées en opposition en parallèle de la bobine. Ainsi, la tension aux bornes de la bobine est limitée dans un premier sens de circulation du courant à la tension Zener de la diode D1 et est limitée dans un deuxième sens de circulation du courant à la tension Zener de la diode D2.

Le fonctionnement d'un tel mode de réalisation est décrit plus en détail ci-après.

La détection de défaut et le contrôle des transistors 52 et 53 est réalisée par deux transistors 612 et 613. Lors d'un défaut, la différence de potentiel produite aux bornes de la bobine entraîne un courant dans la base des transistors 612 ou 613 selon la polarité du défaut :

si V1 >V2+0.6V : le transistor 613 est commandé et
si V1+0.6V < V2 : le transistor 612 est commandé.

La commande du transistor 613 a pour effet de bloquer le transistor 53, ce qui force le courant à circuler dans la résistance 43 et limite son intensité.

La commande du transistor 612 a pour effet de bloquer le transistor 52, ce qui force le courant à circuler dans la résistance 42 et limite son intensité.

La limite de ce dispositif est liée à la tension minimum de commande des transistors 612 et 613 qui correspond à la tension minimale de la jonction base / émetteur passante, c'est-à-dire environ 0.6V. Dans le cas de connections de batteries, cette limite peut être insuffisante si elle engendre un courant trop élevé.

Un tel dispositif de protection présente une consommation énergétique très faible puisqu'elle se réduit à la commande de transistors MOS à effet de champ. Le courant résultant est très inférieur à l'autodécharge des batteries. On réserve un tel mode de réalisation au cas où une différence de potentiel de 0.6V n'engendre pas de courant excessif pour les batteries. C'est la situation d'un assemblage de batteries en série de tension suffisamment élevée. Selon les technologies de batteries, ce circuit peut convenir pour une tension finale plus ou moins élevée d'un ensemble de batteries. A titre d'exemple, dans le cas de deux batteries qui s'équilibrent, on peut considérer qu'une différence de tension entre les batteries inférieure à une valeur égale à deux fois la valeur de résistance interne d'une batterie multipliée par un courant maximal autorisé de la batterie est supportable dans la plupart des cas lors de la connexion en parallèle. Cette valeur est de l'ordre de quelques pourcents de la tension nominale de l'ensemble pour des batteries standard.

Un deuxième mode de réalisation de dispositif 1' de protection selon l'invention est décrit ci-après en référence à la figure 4. Ce mode de réalisation diffère du premier mode de réalisation représenté à la figure 3 par la structure du circuit de pilotage 61'.

Le circuit comprend principalement deux transistors bipolaires 612' et 613'.

Le collecteur du transistor 612' est relié à la masse au travers de la résistance 62. L'émetteur du transistor 612' est relié à la borne de la résistance 42 non commune à la résistance 43. La base du transistor 612' est reliée à la sortie d'un comparateur 652 au travers d'une diode Zener D4 et d'une résistance R6 montées en série. Le comparateur compare le potentiel de la borne A de la première batterie à une tension obtenue par un diviseur de tension R11, R12 à partir du potentiel de la borne B de la deuxième batterie.

Le collecteur du transistor 613' est relié à la masse au travers de la résistance 63. L'émetteur du transistor 613' est relié à la borne de la résistance 43 non commune à la résistance 42. La base du transistor 613' est reliée à la sortie d'un comparateur 653 au travers d'une diode Zener D3 et d'une résistance R5 montées en série. Le comparateur compare le potentiel de la borne B de la première batterie à une tension obtenue par un diviseur de tension R9, R10 à partir du potentiel de la borne A de la première batterie.

Ainsi, les diviseurs de tension permettent de définir un seuil de déclenchement DeltaVmin par un rapport de division des tensions V1 et V2. Les trois cas suivant sont à distinguer :

- Absence de défaut, |V1-V2| < DeltaVmin

Les sorties des comparateurs 652 et 653 sont à l'état haut et les transistors 612' et 613' sont bloqués. Les transistors 52 et 53 sont passants et court-circuitent les résistances de limitation du courant. Le chemin d'impédance entre les deux batteries est très faible ($2\times$Rdson+RI, avec RI la résistance de la bobine).

- Présence de défaut, V1-V2 > DeltaVmin

La sortie du comparateur 653 est à l'état bas et le transistor 613' est activé. Le transistor 53 est bloqué et la résistance de limitation 43 est mise en circuit. Le chemin d'impédance entre les deux batteries provoque une limitation du courant du fait de la présence de la résistance 43.

- Présence de défaut, V2-V1 > DeltaVmin

La sortie du comparateur 652 est à l'état bas et le transistor 612' est activé. Le transistor 52 est bloqué et la résistance de limitation 42 est mise en circuit. Le chemin d'impédance entre les deux batteries provoque une limitation du courant du fait de la présence de la résistance 42.

Dès que les tensions des deux batteries se rééquilibrent, c'est-à-dire que |V1-V2| < DeltaVmin, le circuit revient à l'état initial, les deux transistors 52, 53 devenant passants.

Les diodes Zener D1 et D2 permettent de limiter la surtension qui apparaît aux bornes de la bobine lorsque les résistances de limitation (R3 ou R4) sont mises en circuit ou en sont retirées.

Les diodes Zener D3 et D4, et les résistances R5 et R6 permettent la commande des transistors 612' et 613'.

Dans ce deuxième mode de réalisation, le seuil de détection de défaut peut être abaissé sans limitation. Pour un bon fonctionnement, il ne doit cependant pas être inférieur au niveau de bruit. L'utilisation des comparateurs induit une consommation supplémentaire, cependant des composants de très faible consommation permettent d'obtenir des courants inférieurs à l'autodécharge de la batterie dans bon nombre de cas. Ce deuxième mode de réalisation est adapté par exemple à des batteries de faible tension et de forte capacité, lorsque le premier mode de réalisation n'est pas utilisable. Plus précisément, on utilise ce deuxième mode de réalisation si la réponse du circuit RL formé par la bobine et les résistances internes des batteries induit un courant trop important pour une excitation à un échelon de tension de 0.6V, valeur de la différence de tension pour laquelle la résistance de limitation est déconnectée si on utilise le premier mode de réalisation.

Les effets du dispositif selon l'invention sont décrits ci-après en utilisant des modélisations. Les batteries sont modélisées comme présentant une certaine capacité (modèle V,i,t) ; ce que l'on fait pour des raisons de commodité au moyen d'un condensateur chargé à la même tension que la batterie.

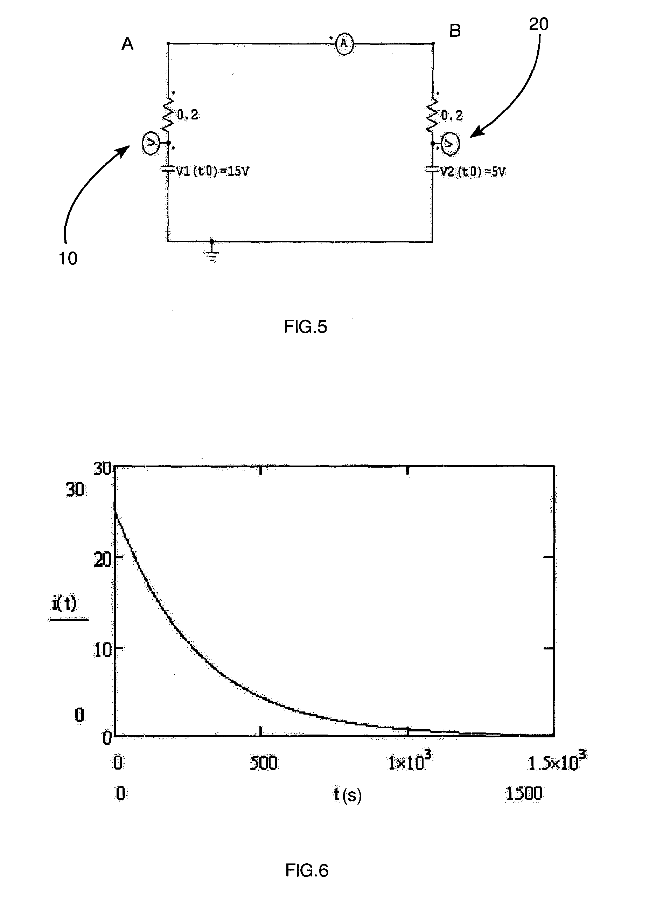

Afin de bien fixer la problématique, l'évolution du courant d'égalisation entre deux batteries chargées différemment est simulée. Si l'on connecte deux batteries en parallèle à des tensions respectives V1 et V2 différentes comme représenté à la figure 5, on observe un très fort courant de court-circuit lors du branchement. L'évolution temporelle de ce courant est représentée à la figure 6 si on modélise la batterie par un condensateur (comme expliqué plus bas).

Elle est alors régie par une équation du type :

$$i(t) = K \times e^{-t/RC} \text{ soit avec les conditions de l'exemple } i(t) = 25 \times e^{-t/0.2 \times 1440}$$

Le courant « d'égalisation » des batteries atteint sa valeur max à t=0 et vaut 25A. L'égalisation prend environ 25 minutes (soit 1500 secondes).

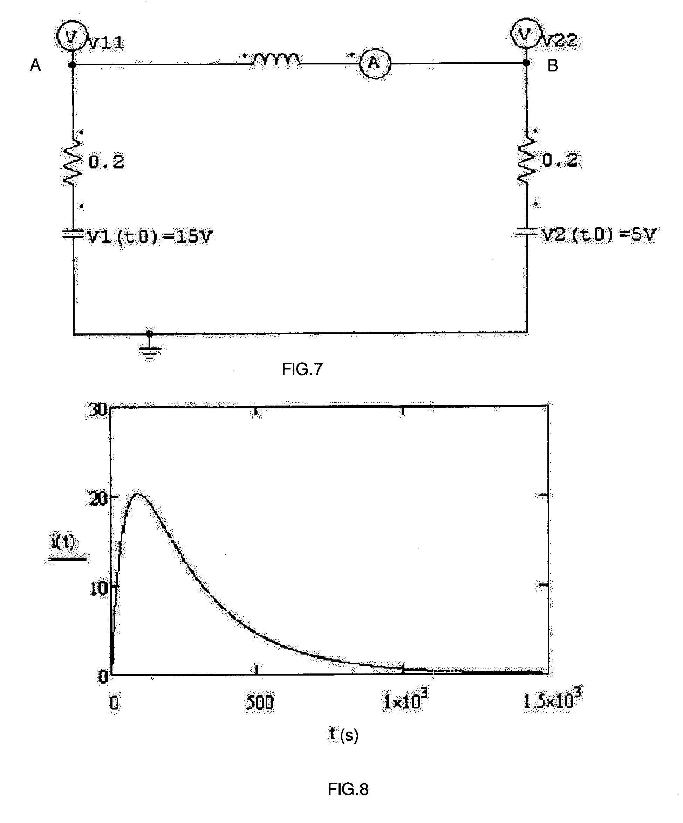

On place à présent une bobine dont l'inductance vaut 15H entre les batteries lors de leur connexion de manière à limiter le courant de court-circuit. Le montage est illustré à la figure 7, on observe un courant de court-circuit lors du branchement. L'évolution temporelle de ce courant est représentée à la figure 8.

Elle est régie par une équation du type :

$$i(t) = -\frac{RC}{2} \times \frac{di}{dt} - \frac{LC}{2} \times \frac{d^2 i}{dt^2} \text{ soit avec les conditions de l'exemple imax=20.288A}$$

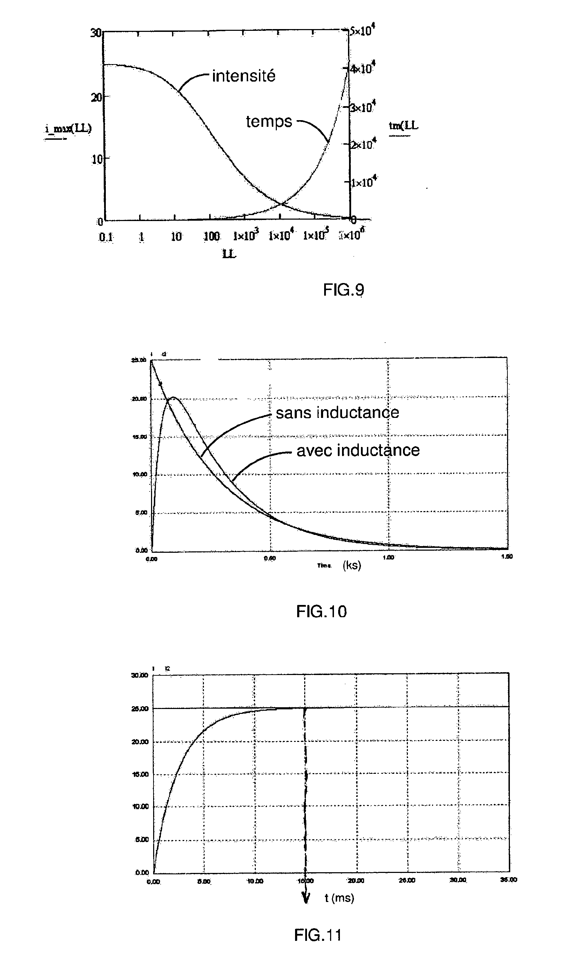

Les deux évolutions des courants sont représentées sur le graphique de la figure 10.

On pourrait donc imaginer limiter le courant en plaçant une bobine d'inductance suffisamment forte entre les batteries. Cependant, une forte valeur d'inductance pénalise la dynamique du circuit comme représenté à la figure 9 représentant les intensités maximales des courants en fonction de l'inductance de la bobine et les temps d'établissement du courant en fonction de l'inductance de la bobine.

Ainsi, une inductance de 10000 henrys permet de limiter le courant maximal à 5 A (contre 25 sans inductance), le courant maximal étant établi en 1h30 environ. Une telle solution n'est pas réaliste.

Par ailleurs, on remarque que, comme représenté sur le graphe de la figure 11, en utilisant une bobine dont l'inductance vaut 1 mH, après 15 ms la réponse est identique à celle du circuit sans bobine.

Un mode d'exécution d'un procédé de fonctionnement d'un dispositif de protection selon l'invention est décrit ci-après.

Il s'agit de détecter les surintensités et de rajouter une résistance de limitation lorsque le courant dépasse un seuil donné. Cette résistance de limitation est ensuite court-circuitée au moment où le courant devient acceptable sans utilisation de résistance de limitation. Ainsi, dans un état final, les tensions des batteries sont identiques et la résistance de limitation est court-circuitée.

Il faut donc commander l'ouverture/fermeture des interrupteurs en fonction de conditions. Le temps pour détecter la surintensité et le temps de réponse des interrupteurs n'étant pas nuls, il faut impérativement empêcher le courant de varier trop rapidement, d'où l'utilisation de la bobine.

Il faut aussi détecter les conditions mentionnées précédemment. Une mesure de courant pourrait être réalisée en utilisant un shunt ou un capteur à effet Hall. Cependant, le shunt resterait connecté en permanence, ce qui entraînerait des pertes supplémentaires en utilisation « normale » des batteries. Le capteur à effet Hall est un composant assez cher et qui nécessite une alimentation particulière.

Ainsi, il est décidé de détecter les conditions en mesurant ou en déterminant une tension V_AB (qui vaut R3i + Lxdi/dt ou R4i + Lxdi/dt quand l'interrupteur 52 ou 53 est ouvert et L×di/dt quand les résistances 42 et 43 sont court-circuitées). Les états des interrupteurs commandés sont commandés en fonction de la valeur de V_AB. L'inductance de la bobine peut en théorie être extrêmement faible puisqu'elle ne sert qu'à mesurer la différence de tension des batteries au moment de la connexion. Cependant, plus elle est faible, plus la variation de courant est rapide (i'(0) = V_AB(0)/L), or les interrupteurs sont des transistors MOS à effet de champ dont le temps de commutation n'est pas nul. Il se pourrait, si l'inductance est trop petite, que le courant ait le temps d'atteindre de trop fortes valeurs entre le moment de la commande et celle de l'ouverture effective des interrupteurs. Supposons par exemple qu'on dispose :

- de transistors MOS à effet de champ dont le temps de commutation est de 1000 ns,
- d'une inductance de 10 μH,

on peut facilement vérifier que la dérivée maximale de l'intensité di/dt maximum intervient en t=0, donc au moment de l'ouverture des interrupteurs le di/dt sera inférieur au di/dt en t=0. Donc le temps que l'interrupteur commandé soit effectivement bloqué, le courant aura varié d'une valeur inférieure à : delta_i = 1000nsxdi/dt(t=0) = 100ns* VAB(0)/L = 0.01 A. (Pour une inductance de 0.1 μH on aurait delta_i = 1 A.)

De préférence, la tension V_AB sert à alimenter l'électronique de commande des transistors MOS 52 et 53. Cette électronique consiste juste à dépolariser les grilles des transistors MOS 52 et 53, lorsque les tensions des batteries sont différentes, ce qui rajoute ainsi les résistances de limitation entre les deux batteries. Ainsi, lorsque les tensions des batteries sont égalisées, l'électronique de commande ne consomme rien.

Deux transistors MOS 52 et 53 et leurs résistances de limitation 42 et 43 doivent être utilisées pour la seule raison que les transistors MOS à effet de champ présentent toujours une diode antiparallèle, l'interruption du courant ne pouvant donc se faire que dans un seul sens. En en mettant deux en série, il est possible d'interrompre le courant dans le circuit quel que soit son sens de circulation. L'utilisation d'une autre technologie d'interrupteurs commandés permettrait de se passer de deux interrupteurs commandés et de n'en utiliser qu'un.

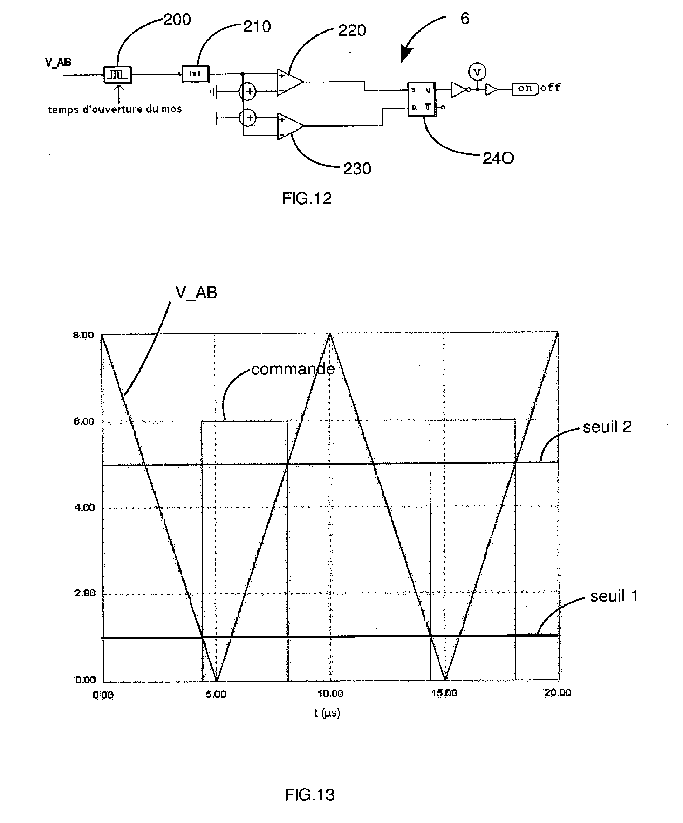

Le fonctionnement du circuit de pilotage 6 est décrit ci-après en référence à la figure 12.

Le signal de tension V_AB mesuré ou déterminé aux bornes d'un ensemble 90 comprenant la bobine et la résistance de limitation est fourni à un opérateur de retard 200 (traduisant le temps nécessaire pour qu'un transistor MOS à effet de champ commute). En sortie de cet opérateur, le signal est transformé au niveau d'un opérateur de valeur absolue 210. Le signal positif qui en sort est ensuite fourni à deux comparateurs afin de comparer le signal positif à deux seuils. La sortie du premier comparateur 220 est reliée à une entrée SET d'une bascule RS 240. La sortie du deuxième comparateur 230 est reliée à une entrée RESET de la bascule RS 240. Le signal de sortie Q de la bascule RS 240 constitue le signal de commande de l'interrupteur commandé.

En fournissant un premier seuil (seuil 1) de 1 V et un deuxième seuil (seuil 2) de 5 V, on obtient alors le fonctionnement suivant :

Lorsque |V_AB| devient supérieur à 5 V : l'interrupteur commandé est ouvert (la résistance de limitation du courant est placée en série avec la bobine sur le chemin du courant).
Lorsque |V_AB| devient inférieur à 1 V: l'interrupteur commandé est fermé (la résistance de limitation du courant est court-circuitée par l'interrupteur commandé).
Le reste du temps, l'interrupteur conserve son état antérieur (mémoire de la bascule RS).

Un tel fonctionnement est illustré à la figure 13.

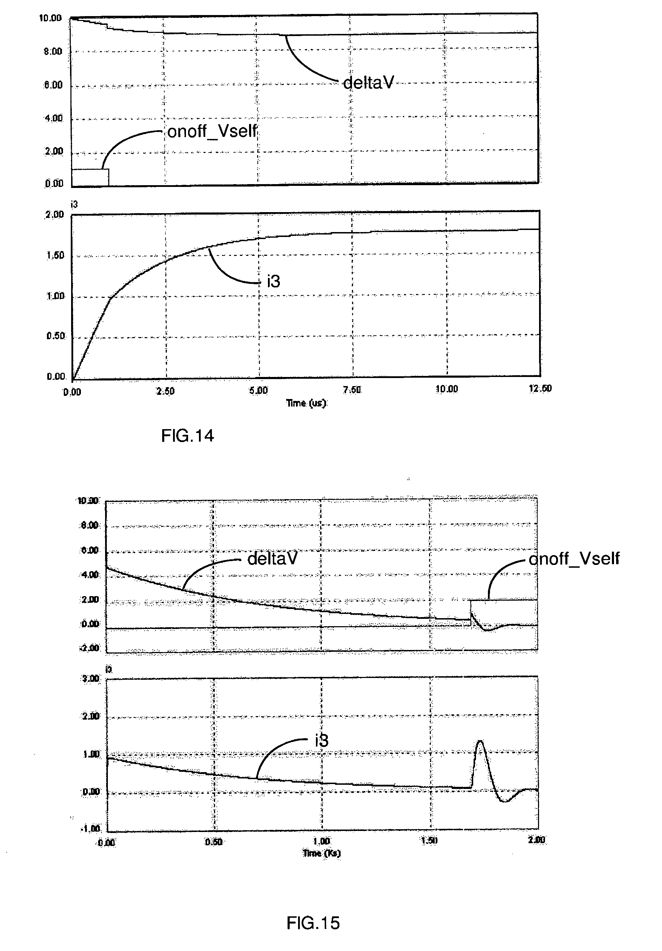

Pour bien visualiser le fonctionnement, le signal |V_AB|, le signal d'intensité du courant et le signal de commande de l'interrupteur commandé sont représentés à la figure 14. La dérivée du courant di/dt à l'instant initial t=0 étant très forte, le seuil de tension de 5 V est instantanément dépassé lors de la connexion des batteries (idéalement, la commande devrait donc bloquer instantanément les transistors MOS à effet de champ pour mettre la résistance de limitation en série). Cependant, comme vu sur le graphique 14, le temps d'ouverture des transistors MOS à effet de champ est d'une microseconde. La résistance de limitation est mise en série après 1 μs.

On remarque que le courant circulant dans la batterie s'établit à une intensité limitée d'environ 1.8 A (voir figure 14).

En supposant la tension des batteries fixe (ce qui est tout à fait correct comme approximation sur un temps court) :

- alors, sans résistance de limitation, l'intensité du courant s'établit (juste après la connexion) à V_AB/(2×Rinterne).
- alors, avec la résistance de limitation, l'intensité du courant n'atteint que la valeur : V_AB/(2×Rinterne+Rlimitation).

Le fonctionnement à plus long terme du dispositif est illustré sur la figure 15 par les évolutions du signal |V_AB|, du signal d'intensité du courant et du signal de commande de l'interrupteur commandé. La résistance de limitation a été placée en série entre les deux batteries en une microseconde (comme vu précédemment). La commande de l'interrupteur commandé se fait donc ensuite en mesurant la tension V_AB = Ldi/dt + Rlimitationxi. L'intensité du courant évoluant lentement (une fois passé le régime transitoire initial), on peut négliger la contribution de tension aux bornes de la bobine Lxdi/dt devant la différence de tensions des batteries.

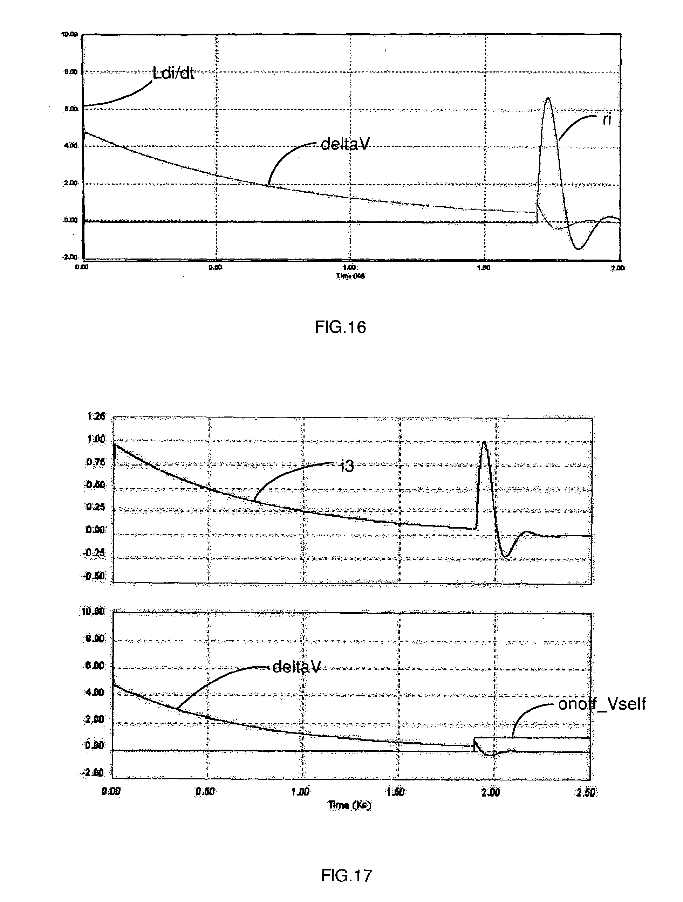

Il faut ensuite attendre que l'intensité du courant ait suffisamment diminué pour que la tension Rlimitation×i passe en dessous du seuil bas (1 V dans l'exemple) avant que l'interrupteur commandé ne se ferme à nouveau pour court-circuiter la résistance de limitation. Il se produit alors un nouveau pic de courant comme représenté à la figure 16 au voisinage de t=1700s. De préférence, il faut fermer l'interrupteur commandé lorsque la différence des tensions est suffisamment basse pour que le pic de courant ne soit pas trop important (ce qui est le cas sur le graphique de la figure 16).

Dans ce cas, on peut modéliser le système et déterminer les équations différentielles régissant son fonctionnement. Le système est alors du type oscillant. De la même manière que précédemment, on peut calculer l'instant pour lequel l'intensité maximale du courant est atteinte puis l'amplitude de cette intensité maximale en fonction de la différence de tension entre les batteries V_AB. On peut en déduire la valeur de différence de tension V_AB qui permet de ne pas dépasser le courant maximum préconisé.

Sur la figure 17, les évolutions du signal |V_AB| ou deltaV, du signal d'intensité du courant et du signal de commande de l'interrupteur commandé sont représentées. Dans cet exemple, on a déterminé que la fermeture de l'interrupteur commandé est déclenchée pour une valeur V_AB de 0.38V de sorte qu'après cette commutation (provoquant le court-circuit de la résistance de limitation), l'intensité du courant ne dépasse pas 1 A.

Pour les simulations précédentes, chaque batterie est modélisée par un condensateur chargé à la tension de la batterie et pouvant restituer la même énergie que la batterie et auquel on ajoute une résistance en série pour modéliser la résistance interne de la batterie.

On a donc :

$$Ebatt(Wh) = Vbatt \times Capa\_batt(Ah)$$

et

$$Ebatt(J) = Vbatt \times Capa\_batt(As) = Vbatt \times Capa\_batt(Ah) \times 3600 \quad Ebatt(J) = 3600 \times Ebatt(Wh)$$

avec:

Ebatt : l'énergie de la batterie,
Vbatt : la tension de la batterie,
Capa_batt : la capacité de la batterie.

Calcul de la capacité du condensateur « équivalent » :

Quelle est la capacité (en farads) du condensateur qui, chargé, à Vbatt contient une énergie égale à Ebatt ?
Un condensateur contient une énergie de : $Econdo(J) = 0.5 \times C(F) \times Vcondo^2$. Ici Econdo = Ebatt et Vcondo = Vbatt donc :

$$C(F) = Ebatt(J)/(0.5 \times Vbatt^2) = 3600 \times Ebatt(Ah)/(0.5 \times Vbatt^2)$$

Par exemple, pour une batterie comprenant 10 éléments NiMH en série de format AA 2400mAh, on a:

$$Ebatt(J) = 3600 \times Vbatt \times Capa\_batt = 3600 \times 1.2 \times 10 \times 2.4 = 103680 \text{ Joules}$$

$$Rtot = 10{\times}Ri = 10{\times}0.02 = 0.2 \text{ Ohms}$$

On modélise donc cette batterie par une résistance de 0.2 Ohms en série avec un condensateur de valeur : C = Capa_batt(J)/(0.5$\times$Vbatt$^2$) = 1440 Farads

L'énergie initiale d'un système de deux batteries avant connexion en parallèle est égale à :

$$Ei = 0.5{\times}C{\times}V1^2 + 0.5{\times}C{\times}V2^2$$

L'énergie finale du système des deux batteries après connexion en parallèle et égalisation des tensions des deux batteries est égale à :

$$Ef = 2{\times}0.5{\times}C{\times}Vf^2 = C{\times}[(V1{+}V2)/2]^2$$

Le rendement est égal à : R = Ef/Ei = 0.5$\times$(V1+V2)$^2$/(V1$^2$+V2$^2$).

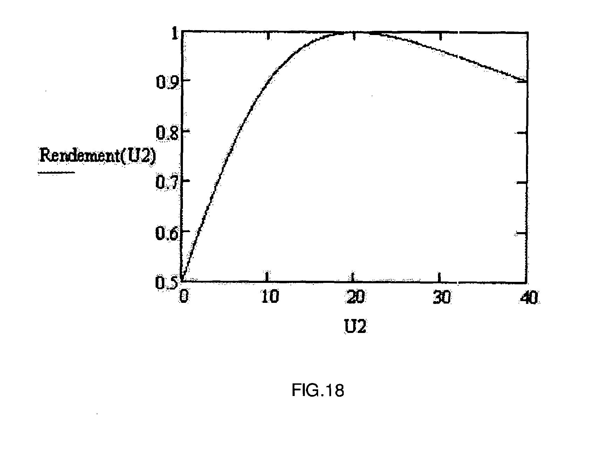

L'évolution de ce rendement en fonction de la tenson V2 de la deuxième batterie est illustrée sur le graphique de la figure 18 pour une valeur de tension V1 de la première batterie égale à 20 V.

On remarque que le rendement varie de 0.5 à 1 pour une tension V2 variant dans l'intervalle [0,V1]. En outre, le rendement ne dépend pas de la résistance de limitation du courant. Il y a toujours les mêmes pertes, l'énergie étant dissipée dans les résistances internes des batteries quand il n'y a pas de résistance de limitation.

Le dimensionnement en puissance de la résistance de limitation est très simple : P = Rlimitation$\times$imax$^2$ (=5*1=5 W dans les exemples précédents).

La bobine est dimensionnée de manière à faire intervenir le dispositif de protection lors d'une variation de courant rapide, un premier critère de rapidité devant être défini. Ce premier critère est déterminé par les temps de réponse de l'interrupteur et de son moyen de commande. Il définit la valeur basse de l'inductance de la bobine : le courant ne doit pas trop varier entre le moment de la détection du surcourant et le moment de l'ouverture de l'interrupteur. Par ailleurs, la valeur haute de l'inductance de la bobine dépend de la dynamique de l'application envisagée : plus les variations de courant imposées par l'application sont rapides, plus la valeur de l'inductance de la bobine doit être faible. Ainsi, de façon générale, on choisit une inductance de bobine proche de la valeur basse. La résistance de la bobine doit quant à elle être la plus faible possible. La bobine doit par ailleurs au moins supporter le courant supportable par les batteries.

Les résistances 42, 43 de limitation du courant sont dimensionnées pour limiter le courant à une valeur acceptable pour les batteries dans le cas du scénario le plus défavorable de différence de tension, c'est-à-dire lorsqu'une batterie complètement chargée est connectée à une batterie complètement déchargée. Si l'on souhaite une protection contre les courts-circuits, il faut prendre en compte la tension de la batterie et le courant maximal acceptable pour le calcul de la résistance.

Par exemple, la résistance 42 ou 43 vaut

$$\Delta Vmax/Ieq$$

avec :

$\Delta$Vmax : différence de potentiel maximale entre les deux batteries, correspondant à une batterie chargée à 100% et une batterie déchargée.

Ieq : courant d'équilibrage maximum supportable par les batteries.

Si l'on souhaite une protection contre les courts-circuits, il faut considérer $\Delta$Vmax = Vbat (tension batterie) et le courant maximum acceptable, pour le calcul de la résistance.

Les résistances 62 et 63 sont des résistances de polarisation des transistors MOS à effet de champ.

Les condensateurs 632 et 633 du premier mode de réalisation permettent une plus grande réactivité du circuit lors d'un défaut dû à un trop fort courant et/ou à une trop brusque variation de courant.

Les interrupteurs commandés 52 et 53 doivent supporter à l'état passant le courant maximum des batteries et présenter une résistance Rdson la plus faible possible. Ils doivent également avoir un temps de réponse court de façon à utiliser une bobine de faible valeur d'inductance.

Les transistors de polarisation 612, 613, 612', 613' sont de petits transistors bipolaires de commutation.

Les diodes Zener limitent la surtension aux bornes de la bobine lors des commutations de l'interrupteur commandé.

Dans le deuxième mode de réalisation, les résistances R9 et R10 d'une part et les résistances R11 et R12 d'autre part forment des ponts diviseurs permettant de régler un seuil de déclenchement du dispositif de protection.

Dans le deuxième mode de réalisation, les comparateurs 652, 653 doivent avoir un temps de réponse le plus court possible pour la réactivité du circuit et permettre un dimensionnement faible de l'inductance de la bobine.

Les diodes Zener D3 et D4 servent à polariser les transistors 612, 612', 613, 613'.

Le dispositif de protection selon l'invention présente différents avantages :

- détection de surintensité de courant et limitation progressive sans pic d'intensité par rapport à la solution de type « polyswitch » de l'art antérieur qui a un temps de réaction d'environ 1 s selon les conditions de courant, température...),
- Très faible consommation (<1 μA),
- Faible résistance additionnelle par rapport à la résistance interne de la batterie,
- Il n'y a pas d'élément résistif ajouté entre les deux batteries pour la mesure du courant comme dans l'état de l'art.

A titre d'exemple, une batterie de 2Ah (NimH) a une résistance interne d'environ 25 mOhms et un courant maximal de décharge de 1 A. Un fusible réarmable correspond a une résistance au repos d'environ 1 Ohms alors qu'un transistor MOS à effet de champ de puissance correspondante (5A) possède une résistance de moins de 30 mOhms.

Dans des variantes des modes de réalisation, les résistances 42 et 43 peuvent être remplacées par des fusibles réarmables de type polyswitch de dimension plus faible et de moindre coût qu'une solution à résistance. Fonctionnellement, cette variante est l'équivalent d'un fusible réarmable à très faible résistance de repos.

Le dispositif de protection selon l'invention peut être utilisé dans tous les cas où il est nécessaire de protéger une source de tension contre un fort appel de courant, c'est-à-dire toute application qui nécessite une protection contre les surintensités ou court-circuit avec de faibles pertes en ligne. Outre la mise en parallèle de batteries, il peut être utilisé pour éviter un court-circuit ou limiter un appel de courant pour certaines charges (chauffage, éclairage, radio...).

Dans le cas d'une mise en court-circuit de la batterie, le dispositif reste actif jusqu'à la disparition du court-circuit ou la décharge complète de la batterie (et le courant est limité par la résistance 43).

Comme déjà évoqué précédemment, cette invention, décrite ci-dessus appliquée aux batteries, est applicable à toute source de tension.

**Revendications**

1. Installation (100; 100') comprenant deux batteries raccordées en parallèle à l'aide d'un premier dispositif (1 ; 1') de protection d'une source de tension (10 ; 20), comprenant :

   - un ensemble parallèle comprenant un interrupteur commandé (5 ; 52, 53) et un élément résistif (4 ; 42, 43),
   - une bobine (3) montée en série avec ledit ensemble entre les deux batteries,
   - un moyen (6) de commande de l'interrupteur dudit ensemble commandé en fonction de la différence de tension (V_AB) entre les deux batteries de sorte que l'interrupteur commandé est fermé lorsque la différence de tension devient inférieure à un premier seuil (seuil 1) et que l'interrupteur commandé est ouvert lorsque la différence de tension devient supérieure à un deuxième seuil (seuil 2).

2. Installation selon la revendication précédente, **caractérisée en ce que** le moyen de commande de l'interrupteur commandé utilise une information de tension aux bornes de la bobine pour commander l'état de l'interrupteur commandé.

3. Installation selon la revendication 1 ou 2, **caractérisée en ce que** le moyen de commande de l'interrupteur commandé utilise une information de tension aux bornes de l'élément résistif pour commander l'état de l'interrupteur commandé.

4. Installation selon l'une des revendications précédentes, **caractérisée en ce que** le moyen de commande de l'interrupteur commandé utilise une information de tension aux bornes de l'ensemble comprenant la bobine et l'élément résistif pour commander l'état de l'interrupteur commandé.

**5.** Installation selon l'une des revendications précédentes, **caractérisée en ce que** l'interrupteur commandé est un transistor de puissance, en particulier un transistor MOS à effet de champ.

**6.** Installation selon la revendication précédente, **caractérisée en ce que** le moyen de commande comprend un transistor (612, 613 ; 612', 613') de pilotage du transistor de puissance.

**7.** Installation selon l'une des revendications précédentes, **caractérisée en ce que** le moyen de commande comprend un comparateur de tension (652, 653).

**8.** Installation selon l'une des revendications précédentes, **caractérisée en ce qu'**elle comprend un ensemble série en opposition de deux diodes Zener disposé en parallèle de la bobine.

**9.** Installation selon l'une des revendications précédentes, **caractérisée en ce qu'**elle comprend un deuxième dispositif de protection, l'interrupteur commandé de chacun des premier et deuxième dispositifs étant un transistor de puissance, en particulier un transistor MOS à effet de champ les premier et deuxième dispositifs étant disposés en série et les transistors de puissance des premier et deuxième dispositifs de protection étant connectés l'un à l'autre symétriquement.

**10.** Installation selon la revendication précédente, **caractérisé en ce que** le deuxième dispositif comprend un deuxième ensemble parallèle comprenant un deuxième interrupteur commandé et un deuxième élément résistif.

**11.** Installation selon la revendication précédente, **caractérisé en ce que** le moyen de commande des premier et deuxième interrupteurs commandés utilise une information de tension aux bornes d'un ensemble constitué par la bobine et/ou des premier et/ou deuxième éléments résistifs.

**12.** Procédé de fonctionnement d'une installation selon l'une des revendications 1 à 11, **caractérisé en ce qu'**on utilise une information de tension entre les deux batteries pour commander l'état de l'interrupteur commandé.

**13.** Procédé de fonctionnement selon la revendication précédente, **caractérisé en ce qu'**on commande la fermeture de l'interrupteur commandé lorsque la valeur absolue de la tension entre les deux batteries devient inférieure à un premier seuil (seuil 1).

**14.** Procédé de fonctionnement selon la revendication 12 ou 13, **caractérisé en ce qu'**on commande l'ouverture de l'interrupteur commandé lorsque la valeur absolue de la tension entre les deux batteries devient supérieure à un deuxième seuil (seuil 2).

## Patentansprüche

**1.** Anlage (100; 100'), die zwei mit Hilfe einer ersten Schutzvorrichtung (1; 1') einer Spannungsquelle (10; 20) parallel geschaltete Batterien enthält, die enthält:

- eine parallele Einheit, die einen gesteuerten Schalter (5; 52, 53) und ein Widerstandselement (4; 42, 43) enthält,
- eine Spule (3), die zwischen den zwei Batterien mit der Einheit in Reihe geschaltet ist,
- eine Steuereinrichtung (6) des Schalters der Einheit, die abhängig von der Spannungsdifferenz (V_AB) zwischen den zwei Batterien so gesteuert wird, dass der gesteuerte Schalter geschlossen ist, wenn die Spannungsdifferenz niedriger als eine erste Schwelle (Schwelle 1) wird, und dass der gesteuerte Schalter offen ist, wenn die Spannungsdifferenz höher als eine zweite Schwelle (Schwelle 2) wird.

**2.** Anlage nach dem vorhergehenden Anspruch, **dadurch gekennzeichnet, dass** die Steuereinrichtung des gesteuerten Schalters eine Spannungsinformation an den Klemmen der Spule verwendet, um den Zustand des gesteuerten Schalters zu steuern.

**3.** Anlage nach Anspruch 1 oder 2, **dadurch gekennzeichnet, dass** die Steuereinrichtung des gesteuerten Schalters eine Spannungsinformation an den Klemmen des Widerstandselements verwendet, um den Zustand des gesteuerten Schalters zu steuern.

**4.** Anlage nach einem der vorhergehenden Ansprüche, **dadurch gekennzeichnet, dass** die Steuereinrichtung des gesteuerten Schalters eine Spannungsinformation an den Klemmen der die Spule und das Widerstandselement enthaltenden Einheit verwendet, um den Zustand des gesteuerten Schalters zu steuern.

5. Anlage nach einem der vorhergehenden Ansprüche, **dadurch gekennzeichnet, dass** der gesteuerte Schalter ein Leistungstransistor, insbesondere ein MOS-Feldeffekttransistor ist.

6. Anlage nach dem vorhergehenden Anspruch, **dadurch gekennzeichnet, dass** die Steuereinrichtung einen Transistor (612, 613; 612', 613') zur Steuerung des Leistungstransistors enthält.

7. Anlage nach einem der vorhergehenden Ansprüche, **dadurch gekennzeichnet, dass** die Steuereinrichtung einen Spannungskomparator (652, 653) enthält.

8. Anlage nach einem der vorhergehenden Ansprüche, **dadurch gekennzeichnet, dass** sie eine Gegenreihenschaltungseinheit von zwei Zener-Dioden parallel zur Spule enthält.

9. Anlage nach einem der vorhergehenden Ansprüche, **dadurch gekennzeichnet, dass** sie eine zweite Schutzvorrichtung enthält, wobei der gesteuerte Schalter jeder der ersten und zweiten Vorrichtungen ein Leistungstransistor ist, insbesondere ein MOS-Feldeffekttransistor, wobei die ersten und zweiten Vorrichtungen in Reihe geschaltet und die Leistungstransistoren der ersten und zweiten Schutzvorrichtungen symmetrisch miteinander verbunden sind.

10. Anlage nach dem vorhergehenden Anspruch, **dadurch gekennzeichnet, dass** die zweite Vorrichtung eine zweite parallele Einheit enthält, die einen zweiten gesteuerten Schalter und eine zweites Widerstandselement enthält.

11. Anlage nach dem vorhergehenden Anspruch, **dadurch gekennzeichnet, dass** die Steuereinrichtung der ersten und zweiten gesteuerten Schalter eine Spannungsinformation an den Klemmen einer aus der Spule und/oder den ersten und/oder zweiten Widerstandselementen bestehenden Einheit verwendet.

12. Betriebsverfahren einer Anlage nach einem der Ansprüche 1 bis 11, **dadurch gekennzeichnet, dass** eine Spannungsinformation zwischen den zwei Batterien verwendet wird, um den Zustand des gesteuerten Schalters zu steuern.

13. Betriebsverfahren nach dem vorhergehenden Anspruch, **dadurch gekennzeichnet, dass** das Schließen des gesteuerten Schalters gesteuert wird, wenn der Absolutwert der Spannung zwischen den zwei Batterien niedriger wird als eine erste Schwelle (Schwelle 1).

14. Betriebsverfahren nach Anspruch 12 oder 13, **dadurch gekennzeichnet, dass** das Öffnen des gesteuerten Schalter gesteuert wird, wenn der Absolutwert der Spannung zwischen den zwei Batterien höher wird als eine zweite Schwelle (Schwelle 2).

**Claims**

1. Installation (100; 100') comprising two batteries joined in parallel with the aid of a first device (1; 1') for protection of a voltage source (10; 20), comprising:

   - a parallel assembly comprising a controlled breaker (5; 52, 53) and a resistive element (4; 42, 43),
   - a coil (3) arranged in series with the said assembly between the two batteries,
   - a means (6) of control of the breaker of the said assembly controlled as a function of the voltage difference (V_AB) between the two batteries so that the controlled breaker is closed when the voltage difference becomes less than a first threshold (threshold 1) and that the controlled breaker is open when the voltage difference becomes greater than a second threshold (threshold 2).

2. Installation according to the preceding claim, **characterized in that** the means of control of the controlled breaker uses an item of information regarding the voltage across the terminals of the coil to control the state of the controlled breaker.

3. Installation according to Claim 1 or 2, **characterized in that** the means of control of the controlled breaker uses an item of information regarding the voltage across the terminals of the resistive element to control the state of the controlled breaker.

4. Installation according to one of the preceding claims, **characterized in that** the means of control of the controlled breaker uses an item of information regarding the voltage across the terminals of the assembly comprising the coil and the resistive element to control the state of the controlled breaker.

5. Installation according to one of the preceding claims, **characterized in that** the controlled breaker is a power transistor, in particular a field-effect MOS transistor.

6. Installation according to the preceding claim, **characterized in that** the control means comprises a transistor (612, 613; 612', 613') for driving the power transistor.

7. Installation according to one of the preceding claims, **characterized in that** the control means comprises a voltage comparator (652, 653).

8. Installation according to one of the preceding claims, **characterized in that** it comprises a series assembly in opposition of two Zener diodes disposed in parallel with the coil.

9. Installation according to one of the preceding claims, **characterized in that** it comprises a second protection device, the controlled breaker of each of the first and second devices being a power transistor, in particular a field-effect MOS transistor, the first and second devices being disposed in series and the power transistors of the first and second protection devices being connected to one another symmetrically.

10. Installation according to the preceding claim, **characterized in that** the second device comprises a second parallel assembly comprising a second controlled breaker and a second resistive element.

11. Installation according to the preceding claim, **characterized in that** the means of control of the first and second controlled breakers uses an item of information regarding the voltage across the terminals of an assembly consisting of the coil and/or of the first and/or second resistive elements.

12. Method of operation of an installation according to one of Claims 1 to 11, **characterized in that** an item of information regarding the voltage between the two batteries is used to control the state of the controlled breaker.

13. Method of operation according to the preceding claim, **characterized in that** the closing of the controlled breaker is commanded when the absolute value of the voltage between the two batteries becomes less than a first threshold (threshold 1).

14. Method of operation according to Claim 12 or 13, **characterized in that** the opening of the controlled breaker is commanded when the absolute value of the voltage between the two batteries becomes greater than a second threshold (threshold 2).

FIG.1

FIG.2

FIG.3

FIG.4

FIG.5

FIG.6

FIG.7

FIG.8

FIG.9

FIG.10

FIG.11

V_AB

temps d'ouverture du mos

200 210 220 6 240 230

FIG.12

V_AB

commande

seuil 2

seuil 1

t (µs)

FIG.13

FIG.14

FIG.15

FIG.16

FIG.17

FIG.18

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 684677 A
- US 2005285572 A
- WO 2010120832 A